# EUROPEAN PATENT SPECIFICATION

(11) **EP 3 069 461 B1**
(45) Date of publication and mention of the grant of the patent: **05.09.2018**
(21) Application number: 14796442.3
(22) Date of filing: 23.10.2014
(51) Int. Cl.: H04L 9/06, H04L 9/00, G09C 1/00

(54) **METHOD TO SECURELY ENCRYPT A SENSITIVE DATA**
VERFAHREN ZUR VERSCHLÜSSELUNG VON SENSIBLEN DATEN SICHER GEGEN TEMPLATEANGRIFFE
PROCÉDÉ DE CHIFFREMENT DE DONNÉES SENSIBLES SÉCURISÉ CONTRE LES ATTAQUES PAR TEMPLATE

(30) Priority: 15.11.2013 EP 13306566
(43) Date of publication of application: 21.09.2016
(73) Proprietor: Gemalto SA, 92190 Meudon (FR)
(72) Inventor: VILLEGAS, Karine, F-13881 Gemenos Cedex (FR); HAMZI, Nabil, F-13881 Gemenos Cedex (FR); BOURBAO, Eric, F-13881 Gemenos Cedex (FR)
(74) Representative: Thomas, Christine Marie Catherine
(86) International application number: PCT/EP2014/072727
(87) International publication number: WO 2015/071064

(56) References cited:
- US-A1- 2005 135 607
- NICOLAS VEYRAT-CHARVILLON ET AL: "Shuffling against Side-Channel Attacks: A Comprehensive Study with Cautionary Note", 2 December 2012 (2012-12-02), ADVANCES IN CRYPTOLOGY ASIACRYPT 2012, SPRINGER BERLIN HEIDELBERG, BERLIN, HEIDELBERG, PAGE(S) 740 - 757, XP047011271, ISBN: 978-3-642-34960-7 section Opimized Implementation with randomized execution path (pages 744-745)
- ALI GALIP BAYRAK ET AL: "An architecture-independent instruction shuffler to protect against side-channel attacks", ACM TRANSACTIONS ON ARCHITECTURE AND CODE OPTIMIZATION, vol. 8, no. 4, 1 January 2012 (2012-01-01) , pages 1-19, XP055110086, ISSN: 1544-3566, DOI: 10.1145/2086696.2086699

## Description

### FIELD OF THE INVENTION

The present invention relates to a method to encrypt a sensitive data constituted by words using a ciphering algorithm, said ciphering algorithm having at least one round comprising at least two operations to be executed on all words.

The invention also pertains to a device comprising elements to implement said method.

### BACKGROUND OF THE INVENTION

It is known that the knowledge of the AES algorithm steps enables to anticipate intermediate values and thus to perform fault and side channel attacks. Typically, with side channel leakage, AES implementations are characterized by 9 periodic patterns. In each pattern, are retrieved 4 consecutive sub-patterns and each sub-pattern is divided in 16 blocks.

There are some methods that offer some means to make harder the reverse engineering and so attacks. Among them are the introduction of random delays, the application of data masking, the power scrambling... Shuffling in also known as a countermeasure from, for example, "Shuffling against Side-Channel Attacks: A Comprehensive Study with Cautionary Note", by Nicolas Veyrat-Chatillon et al., published in December 2012 in ASIACRYPT 2012, ISBN: 978-3-642-34960-7 and "An architecture-independent instruction shuffler to protect against side-channel attacks", by Ali Galip Bayrak et al. , published in January 2012 in ACM Transactions on Architecture and Code Optimization, vol. 8, no. 4, ISSN: 1544-3566.

All of these methods however could be gone round by signal processing methods.

Further alternative and advantageous solutions would, accordingly, be desirable in the art in order to strengthen the resistance of encryption algorithms to side channel attacks and template attacks.

### SUMMARY OF THE INVENTION

The present invention aims at avoiding, or at least making more difficult the above-mentioned malicious attacks.

The present invention is defined, in its broadest sense, as a method to encrypt a sensitive data as defined in claim 1.

The invention proposes to shuffle the operations inside each round of the encryption algorithm in order to make the reverse engineering more complex and template attacks not possible. With the invention, any structure awaited from a regular encryption algorithm is highly broken. Therefore, the method according to the present invention allows reducing the risks of malicious attacks. At least, the attacks are more complex to carry out for a malicious attacker. The way data are handled implies non predictable memory access for each accessed byte.

By shuffling the operations in each algorithm round, the invention makes not possible reverse engineering and template attacks during these operations. The invention can be implemented in software or in hardware.

In a particular implementation, substitution and/or permutation operations are operations defined and performed on a matrix initially comprising words of the sensitive data to be ciphered.

This implementation corresponds to the generally used format to apply algorithm of the kind of AES. In such a case, operations are defined regarding the matrix. Words stored in such a matrix are classically manipulated in rows or columns at least in certain operations.

According to a particular feature, permutation operations comprise shift-row operations operating on the rows of the intermediary matrix by cyclically shifting the bytes in each row by a certain offset.

As soon as an additional buffer will be available, this operation is fully switchable with others which is advantageous for the implementation of the invention.

According to another particular feature, substitution operations operate on each word in the matrix by replacing it by a value predefined in an 8-bit substitution box.

Using a substitution matrix comprising all the possible word to implement a substitution step is well known. Typically a Rijndael S-box will be used in such an operation.

More particularly, said method comprising a preliminary key expansion step where round keys are derived from the encryption key, each round further combining words of the corresponding round key with the words in the obtained intermediary matrix.

This feature enables to have a different key for each round. It is original to mix this step with others operations according to the invention. This is rendered possible through the use of status flags to know which algorithm operations were already applied, the use of buffers and the use of additional operations in case of need.

The present invention also relates to a device having cryptography means to encrypt sensitive data according to claim 6. Such a device has of course the calculation means to apply operations, preferably to each word independently as defined in the preferred embodiment of the invention. Such calculation means to apply substitution, permutation and combination with a key as defined in the particular features of the invention are known by the man skilled in the art.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in details certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows a schematical flowchart of the method of the invention;
- Figures 2A to 2D schematically show the steps of an AES ciphering algorithm of the prior art;
- Figures 3A to 3D schematically show successive operations as performed according to a first example not covered by the claims; and
- Figures 4A to 4D schematically show four intermediary operations as performed according to a second embodiment of the invention.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described.

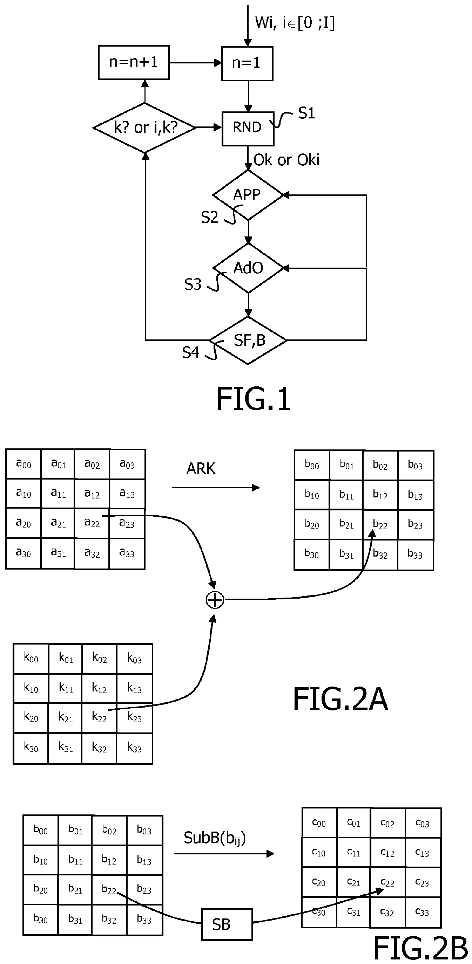

FIG. 1 shows a schematic flowchart for a method of the invention to encrypt sensitive data constituted by words Wi with i from 1 to I.

The ciphering algorithm comprises rounds illustrated by the increment of a number n on figure 1. In each of these rounds n, at least two operations Ok have to be applied on the words, k going from 1 to the number of switchable operations to be applied on the words. Furthermore, it is here noted that other operations that will not be switched can also be applied on the sensitive data. An example will be given below.

In a first step S1, a random order RND is determined for said operations in each round. Depending on the embodiment, this random order will only affect the order of operations Ok applied on the whole set of data or this random order will affect the order of operations, each being associated with a word, thus an order of couples "operation/word". The application of the operations on the whole set of words or on individual words is tracked with status flags SF. The application of operations also uses additional buffer(s) B in order to store the intermediate values. According to the invention, those flags SF and additional buffer(s) B are susceptible to be updated at each application of an operation.

In a second step S2, the operation Ok or Oki is applied to the whole set of words or only on the word Wi. Additional operations AdO can be performed in order to correctly apply this operation in a step S3.

Status flags SF and additional buffer(s) B are updated in a step S4.

The updated status flags and additional buffer(s) are used in the operation application step S2 and in the additional operations' step S3. The flags and buffers are also used to determine if all operations were applied on all words of the sensitive data. As long as all operations k has not been applied on the whole set of data or as long as all couples operations/words has not been processed, the random order is continued to be swept.

Once all the operations or couples have been processed, another round is launched if the maximum number of rounds of the algorithm is not yet reached. This is illustrated by an increment n=n+1. Otherwise the obtained words constitute the encrypted data.

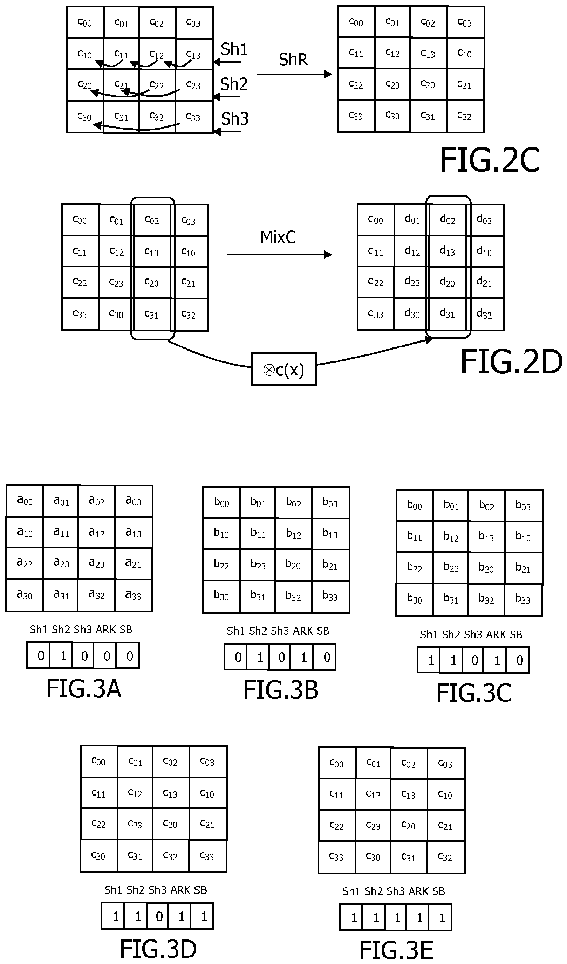

Figure 2 shows an example of an algorithm of the prior art on which the invention can be applied. This algorithm is of the AES standard type. Typically, in this kind of algorithm, a preliminary of key expansion is processed. It results in as many round keys RKn as rounds to be performed in the algorithm.

On figure 2, this algorithm is shown applied on a sensitive data matrix comprising 16 words aij. In a first step ARK shown in figure 2A, the words are XORed with a first round key RK0. A matrix comprising words bij is thus obtained.

Then, the rounds are started, each round being constituted by a substitution step SB illustrated on figure 2B, a step ShR where rows are shifted illustrated on figure 2C, a step MixC where columns are multiplied by a polynomial c(x) shown on figure 2D and a last step, not shown as similar to the one shown on figure 2A, of adding the round key corresponding to the round.

The substitution step SUB gives a matrix of words cij where the words are substituted by a corresponding value stored in a previously defined substitution box. The shift row step ShR consists in shifting rows depending on the concerned row. On the example shown on figure 2C, the second row is shifted Sh1 once, the third is shifted Sh2 on two digits and the fourth row is shifted Sh3 on 3 digits. The mix column step gives a matrix of words dij.

The invention relies on the fact that some operations are switchable for the whole set of words or even for couples word/operations independently.

In a first simple embodiment, substitution step and shift rows are switched randomly according to the invention. The shuffling of these operations can be done on a whole matrix base or on a word by word base. In this last case the reverse engineering is of course render more complex. Furthermore template attacks are impossible in this last case. With a whole matrix base for the shuffling, template attacks are much more difficult than previously observed.

The performance of each of the operations is tracked using status flag for the whole matrix or for each word. In the case of a word by word shuffling, an additional buffer can also be used to store intermediate state and avoid a substitution on a wrong value previously shifted. It has to be noted here that the definition of the rounds in AES are advantageously modified here. Indeed it is here preferable not to have a preliminary add round key before starting the rounds but including the add round key as the first step of the round. In this case, there is no consequence to apply the substitution operation before the adding round key operation.

However, the operation of adding the round key can also be mixed with the shift row operation. In this case, a shift row operation is also applied to the round key in a dedicated buffer.

The three above steps can also be mixed all together on a whole matrix base or on a word case while necessary flags and buffer are provided.

Examples of sequences of shuffled operations and their results are given on next figures.

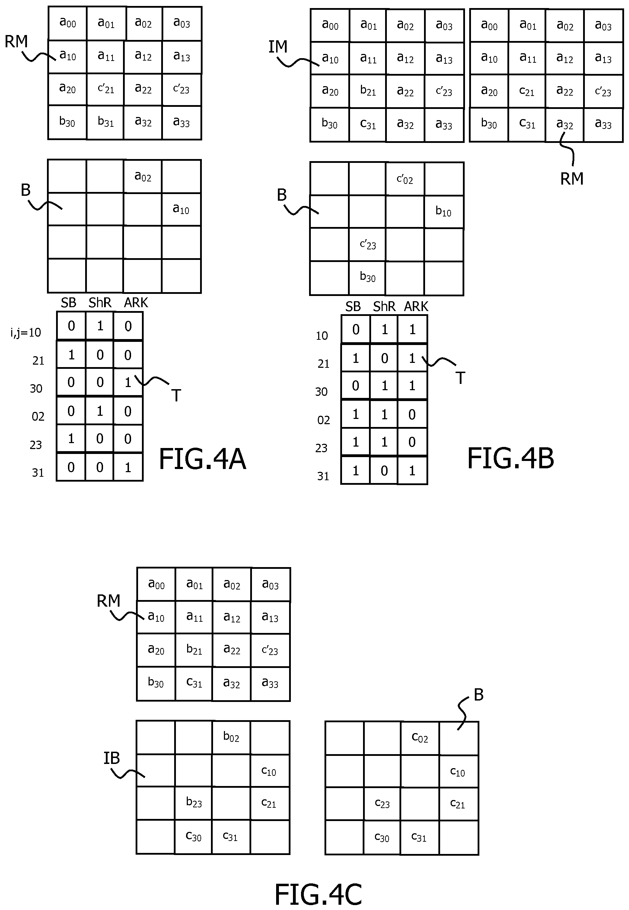

On figure 3, an example is given for operations shuffled on a whole matrix base, while considering that each shift row operation indeed acts on a single row of the whole matrix. On figure 4 is given an example for operations shuffled on a couple operation/word base.

Figure 3A shows the matrix resulting from the application of a shift row Sh2 on third row of the matrix. Then an add round key operation is processed giving the matrix shown on figure 3B. It has to be noted here that a same shift row operation as the one previously applied on the matrix shown on figure 3A has been applied on the round key before the add round key operation is performed. It is followed by a shift row Sh1 on second row; the result of which being shown on figure 3C. Then the substitution operation is performed for the whole matrix giving the matrix shown on figure 3D. At last the last shift row on last row is processed giving the matrix on figure 3E. The performance of each successive operation can be followed in status flags named Sh1,Sh2,Sh3,ARK and SB for, respectively shift second row, shift third row, shift fourth row, add round key and substitution box operations. Here the index k of operations to be applied runs between 1 and 5.

It can be noted here that add round key operation is performed before the substitution operation. The rounds being defined, as previously stated, with the add round key operations at first, there is no problem with the substitution operation. In the case a substitution operation was first done on the initial matrix it would be necessary to inverse it to apply an additional substitution operation on the matrix obtained after the add round key operation. Otherwise, the result would be different from the one expected. Such additional operations could be implemented as soon as such a situation is detected while considering the status flag.

Figure 4 shows three intermediary result matrix RM gathering all the 6 possible sequences of operations than can be encountered for a couple operation/word while shuffling the three operations (here the index for operations thus runs between 1 and 3) above presented and the words. These six possible sequences are shown for 6 different words listed as pairs of numbers ij on figure 4. The two tables T shown on figures 4A and 4B list the status flags for these words. These status flags are provided for the three possible operations, here substitution SB, shift row ShR and add round key ARK. At least three status flags per words are thus needed to implement this embodiment of the invention. They are indeed describing the 6 possible sequences of operations. The matrix as shown on figure 4A is the one obtained after application of one operation per word, so after 6 operations.

Thus, on figure 4A, one operation among the three possible, has been performed for each of the words. In particular, a shift row operation SR was applied on words 10 and 02. The application of this operation necessitates the use of a buffer B. Otherwise the application of subsequent operations could be performed using a wrong value. The shifted values a02 and a10 are thus stored in the buffer B.

An add round key ARK was applied on word a30 and a31 giving b30 and b31. As this operation is the first to be realized in each round, the two other operations, substitution and shift will be able to be applied without any additional operations.

Contrarily, it can be noted here that the applications of the two substitution operations SB applied at first on words 21 and 23 result in two values noted c'21 and c'23. Indeed, as, here, the value used to do the substitution was not the one obtained after the add round key ARK, there is a need to inverse these substitution values c'21 and c'23 to apply the add round key operation ARK.

That is what is observed for the word 21 on figure 4B where the add round key operation ARK has been applied. For this word, b21 is the result of an inverse substitution (leading to a21), followed by an add round key operation on value a21. It gives b21 in an intermediate matrix IM. Here another additional operation of substitution has to be done to obtain the value c21 as shown in result matrix RM.

On figure 4B, two operations among the three possible, have been performed for each of the words. The matrix presented on figure 4B is the result of 6 successive operations only applied on the words selected for the purpose of the disclosure of the embodiment from the state shown on figure 4A. Of course, other operations on other words could be interlaced but it is not represented here and only operations for the 6 selected words are shown.

Also, a shift row SR was applied on c'23 and the result is stored in buffer B. A shift row SR is also applied on b30 and the result is also stored in buffer B.

On word 31, a substitution SB is performed leading to c31 as it can be seen in intermediate matrix IM and in result matrix RM on figure 4B. For this word the order of operation is the one applied in the prior art AES algorithm.

Also an add round key ARK was applied on word 10. This add round key ARK is performed on the initial data a10 but in the buffer B where the result of the previous shift row is stored. This lead to a value b10 stored in buffer B. As previously noted, when a shift row was applied before the add round key, there is a need to apply the shift row operation to the corresponding value in the round key before the application of the add round key operation. An additional buffer to store the round key with shifted values is needed.

At last, a substitution operation is applied on word 02. This substitution leads to a value c'02 stored in buffer B as the previous operation was a shift row.

Figure 4C shows the result of the application of 6 operations, one for each of the selected words. Status flag are not shown for this last figure but every box would contain 1.

On this last figure, a shift row ShR was applied to word 31 leading to the storage of the value c31 is buffer B. Substitution operations were applied to words 30 and 10 leading to values c30 and c10 replacing b30 and b10 in buffer B. A shift row operation was applied to word 21 leading to the storage of c21 in the buffer B.

At last add round key operations were applied to words 02 and 23. It is here also necessitated to previously apply the shift row operation on the round key, the result being stored in a buffer. These operations also necessitate additional operations as these are the values c'02 and c'23 that were stored in the buffer B after the previous operations. Here the substitution has to be inversed to fall back to a02 and a23, add round key operations have to be applied on these recovered values to obtained b02 and b23 as shown stored in an intermediate state of the buffer noted IB. At last, a substitution operation is applied on these values. This leads to the storing of values c02 and c23 in buffer B.

Here it has to be noted that a restriction concerning the application of a substitution operation only after the add round key operation occurred can also be implemented on a couple operation/word base. Otherwise additional operations will be performed. This is not fundamentally harming in terms of performance as such operations are not costly.

In the embodiment shown on figure 4, the three operations of add round key, substitution and shift row are performed on 16 bytes independently. There are thus 48 couple operation/word for all calls. Those different operations are shuffled among them to produce an unpredictable execution flow according to the invention.

It could cost at most two additional buffers of the size of the sensitive data, 16 words in the shown embodiment, to store second state and a intermediate result of add round key when additional operations are required. Besides there is also a need for a bit-access buffer of 3 times the number of words for the storage of the status flags SF.

In the above detailed description, reference is made to the accompanying drawings that show, by way of illustration, specific embodiments in which the invention may be practiced. The above detailed description is, therefore, not to be taken in a limiting sense, and the scope of the present invention is defined only by the appended claims, appropriately interpreted, along with the full range of equivalents to which the claims are entitled.

## Claims

1. Method to encrypt a sensitive data constituted by words (Wi) using a ciphering algorithm implementation, said ciphering algorithm having at least one round (n) comprising at least three operations (Ok or Oki) to be executed on all words (Wi), said operations (Oki) comprising at least an operation of combination of an encryption key with the words (Wi) of the sensitive data, substitution operation and permutation operation, said operations (Oki) being switchable thanks to operation status flags (SF), additional buffer (B) and additional operations (AdO), all possible couple (operation, Wi) from said operations (Oki) and from said words (Wi) being furthermore switchable independently, said method comprising the steps of:
- randomly determining (S1) an order (RND) for all said couples (Oki, Wi) in each round (n);
- applying (S2) operations (Oki) on all words (Wi) of the sensitive data according to the determined order (RND) of couples (Oki, word) in each round (n);
- performing (S3) additional operations (AdO) in case of need;
- updating (S4) operation status flags (SF) and additional buffer (B) depending on the application of the operations (Ok or Oki).

2. Method according to claim 1, wherein operations (Ok or Oki) are operations defined and performed on a matrix initially comprising words (Wi) of the sensitive data to be ciphered.

3. Method according to claim 2, wherein permutation operations comprise shift-row operations (ShR, Shi) operating on the rows of the intermediary matrix by cyclically shifting the bytes in each row by a certain offset.

4. Method according to claim 2, wherein substitution operations operate on each word (Wi) in the matrix by replacing it by a value predefined in a word substitution box.

5. Method according to claim 1, said method comprising a preliminary key expansion step where round keys (RK) are derived from the encryption key, each round (n) further combining words of the corresponding round key (RK) with the words (Wi) in the obtained intermediary matrix.

6. Device having cryptography means to encrypt sensitive data according to the method as claimed in one of the preceding claims, said device further comprising buffers to store status flags (SF) and intermediate values (B) for words (Wi).

## Patentansprüche

1. Verfahren zum Verschlüsseln sensibler Daten bestehend aus Worten (Wi), wozu ein Chiffrierungsalgorithmus eingesetzt wird, wobei dieser Chiffrierungsalgorithmus aus mindestens einer Runde besteht,
(n) bestehend aus mindestens drei Operationen (Ok oder Oki), die an allen Wörtern (Wi) durchgeführt werden, wobei diese Operationen (Oki) mindestens eine Operation zur Kombination eines Kodierungsschlüssel mit den Wörtern (Wi) der sensiblen Daten, eine Substitutionsoperation und eine Vertauschungsoperation umfassen, diese Operationen (Oki) dank der Statusflaggen (SF) der Operationen, des zusätzlichen Puffers (B) und der zusätzlichen Operationen (AdO) umschaltbar sind, wobei ferner alle möglichen Paare (Operation, Wi) aus den besagten Operationen (Oki) und aus den besagten Wörtern (Wi) unabhängig umschaltbar sind, wobei das Verfahren die folgenden Schritte umfasst:
- Zufällige Ermittlung (S1) einer Reihenfolge (RND) für alle besagten Paare (Oki, Wi) in jeder Runde (n);
- Anwendung (S2) der Operationen (Oki) an allen Wörtern (Wi) der sensiblen Daten entsprechend der ermittelten Reihenfolge (RND) der Paare (Oki, Wort) in jeder Runde (n);
- Ausführung (S3) von zusätzlichen Operationen (AdO) im Bedarfsfall;
- Aktualisierung (S4) der Statusflaggen (SF) der Operationen und des zusätzlichen Puffers (B) je nach Anwendung der Operationen (Ok oder Oki).

2. Verfahren nach Anspruch 1, wobei die Operationen (Ok oder Oki) Operationen sind, die an einer Matrix definiert und durchgeführt werden, welche anfangs Wörter (Wi) der sensiblen Daten umfasst, die verschlüsselt werden sollen.

3. Verfahren nach Anspruch 2, wobei die Vertauschungsoperationen ShiftRow-Operationen (ShR, Shi) umfassen, die an den Reihen der Zwischenmatrix ausgeführt werden, indem die Bytes in jeder Reihe um einen bestimmten Versatz zyklisch verschoben werden.

4. Verfahren nach Anspruch 2, wobei die Substitutionsoperationen an jedem Wort (Wi) in der Matrix ausgeführt werden, indem dieses durch einen Wert ersetzt wird, der in einer Wort-S-Box vorgegeben ist.

5. Verfahren nach Anspruch 1, wobei das Verfahren einen einleitenden Schlüssel-Expansionsschritt umfasst, bei dem aus dem Kodierungsschlüssel Rundenschlüssel (RK) abgeleitet werden und ferner in jeder Runde (n) Wörter des entsprechenden Rundenschlüssels (RK) mit den Wörtern (Wi) in der erhaltenen Zwischenmatrix kombiniert werden.

6. Vorrichtung mit kryptographischen Mitteln zur Verschlüsselung sensibler Daten gemäß dem Verfahren, das in einem der vorhergehenden Patenansprüche definiertr wird, wobei die Vorrichtung ferner Puffer zum Speichern von Statusflaggen (SF) und Zwischenwerten für Wörter (Wi) umfasst.

## Revendications

1. Procédé de chiffrement de données sensibles constituées de mots (Wi) à l'aide de la mise en oeuvre d'un algorithme de chiffrement, ledit algorithme de chiffrement comprenant au moins une ronde
(n) incluant au moins trois opérations (Ok ou Oki) à exécuter sur tous les mots (Wi), lesdites opérations (Oki) comprenant au moins une opération consistant à combiner une clé de chiffrement avec les mots (Wi) des données sensibles, une opération de substitution et une opération de permutation, lesdites opérations (Oki) pouvant être commutées grâce à des drapeaux d'état d'opération (SF), un tampon supplémentaire (B) et des opérations supplémentaires (AdO), toutes les combinaisons possibles (opération, Wi) desdites opérations (Oki) et desdits mots (Wi) pouvant en outre être commutées de façon indépendante, ledit procédé comprenant les étapes suivantes :
- détermination aléatoire (S1) d'un ordre (RND) pour toutes lesdites combinaisons (Oki, Wi) dans chaque ronde (n) ;
- application (S2) d'opérations (Oki) sur tous les mots (Wi) des données sensibles conformément à l'ordre déterminé (RND) des combinaisons (Oki, mot) dans chaque ronde (n) ;
- réalisation (S3) d'opérations supplémentaires (AdO) en cas de besoin ;
- mise à jour (S4) des drapeaux d'état d'opération (SF) et du tampon supplémentaire (B) en fonction de l'application des opérations (Ok ou Oki).

2. Procédé selon la revendication 1, dans lequel des opérations (Ok ou Oki) correspondent à des opérations définies et réalisées sur une matrice comprenant initialement des mots (Wi) des données sensibles à chiffrer.

3. Procédé selon la revendication 2, dans lequel des opérations de permutation comprennent des opérations de décalage de ligne « shift rows » (ShR, Shi) agissant sur les lignes de la matrice intermédiaire en transposant de façon cyclique les octets dans chaque ligne selon un certain décalage.

4. Procédé selon la revendication 2, dans lequel des opérations de substitution agissent sur chaque mot (Wi) dans la matrice en le remplaçant par une valeur prédéfinie dans une boîte de substitution des mots.

5. Procédé selon la revendication 1, ledit procédé comprenant une étape préliminaire d'expansion de la clé dans laquelle des clés de rondes (RK) sont dérivées de la clé de chiffrement, chaque ronde (n) combinant en outre des mots de la clé de ronde correspondante (RK) avec les mots (Wi) figurant dans la matrice intermédiaire obtenue.

6. Dispositif pourvu d'un moyen de chiffrement permettant de chiffrer des données sensibles selon le procédé tel que revendiqué dans l'une des revendications précédentes, ledit dispositif comprenant en outre des tampons pour stocker des drapeaux d'état (SF) et des valeurs intermédiaires pour des mots (Wi).
